# EUROPÄISCHE PATENTANMELDUNG

(11) **EP 1 248 406 A1**
(43) Veröffentlichungstag der Anmeldung: **09.10.2002**
(21) Anmeldenummer: 02400028.3
(22) Anmeldetag: 04.04.2002
(51) Int. Cl.: H04L 1/00

(54) **Verfahren zum Betreiben eines funkbasierten Telekommunikations-systems**

(30) Priorität: 07.04.2001 DE 10117628
(71) Anmelder: ALCATEL, 75008 Paris (FR)
(72) Erfinder: Mortensen, Ivar, 70499 Stuttgart (DE)
(74) Vertreter: Dreiss, Fuhlendorf, Steimle & Becker

(57) **Zusammenfassung**

Es wird ein Verfahren zum Betreiben eines funkbasierten Telekommunikationssystems, insbesondere eines UMTS-Telekommunikationssystems beschrieben. Die zu übertragenden Daten werden in Datenrahmen, sogenannten Frames, übertragen. Mehrere Frames werden zu einem Bündel zusammengefaßt. Zu jedem Frame wird ein formatbezogener Indikator übertragen. Vorab wird eine Anzahl von zulässigen formatbezogenen Indikatoren festgelegt. In Abhängigkeit von der Zusammenfassung von Frames in Bündeln wird die Anzahl der zulässigen formatbezogenen Indikatoren vermindert.

## Beschreibung

### Stand der Technik

Die Erfindung geht aus von einem Verfahren zum Betreiben eines funkbasierten Telekommunikationssystems, bei dem die zu übertragenden Daten in Datenrahmen, sogenannten Frames, übertragen werden, bei dem mehrere Frames zu einem Bündel zusammengefaßt werden, bei dem zu jedem Frame ein formatbezogener Indikator übertragen wird, und bei dem vorab eine Anzahl von zulässigen formatbezogenen Indikatoren festgelegt wird. Die Erfindung betrifft ebenfalls eine Basisstation oder eine Mobilstation eines funkbasierten Telekommunikationssystems sowie einen Empfänger für eine derartige Basisstation oder Mobilstation.

Ein derartiges Verfahren ist beispielsweise von einem UMTS-Telekommunikationssystem bekannt (siehe Standard 3GPP, TS 25.302). Dort weisen die Datenrahmen bzw. Frames eine Zeitdauer von 10 Millisekunden auf. Beispielsweise acht Frames können zu einem Bündel zusammengefaßt werden. Als formatbezogener Indikator ist der sogenannte TFC-Indikator (TFC = transport format combination) vorgesehen, der beispielsweise Null sein kann, sofern keine Sprache übertragen wird, oder Eins, wenn Sprache übertragen wird. Die vorstehenden Möglichkeiten des TFC-Indikators sowie deren Bedeutung werden vorab in einem sogenannten Setup-Verfahren mittels eines TFC-Sets festgelegt. Dieses TFC-Set enthält dabei alle zulässigen Möglichkeiten, die die zusammen mit den nachfolgenden Frames empfangenen TFC-Indikatoren aufweisen dürfen.

Nach dem standardisierten Vorgehen für ein UMTS-Telekommunikationssystem ist es erforderlich, den empfangenen TFC-Indikator für jeden Frame mit denjenigen TFC-Indikatoren zu vergleichen, die gemäß dem TFC-Set zulässig sind. Bei dieser Überprüfung besteht eine von Null verschiedene Wahrscheinlichkeit, daß Fehler auftreten. Ein derartiger Fehler führt dazu, daß der TFC-Indikator falsch erkannt wird, was wiederum zur Folge hat, daß das gesamte Format, insbesondere die Dekodierung und/oder Demodulation der empfangenen Daten fehlerhaft durchgeführt werden. Die empfangenen Daten sind damit unwiederbringbar verloren.

### Aufgabe und Vorteile der Erfindung

Aufgabe der Erfindung ist es, ein Verfahren der eingangs genannten Art zu schaffen, bei dem die Wahrscheinlichkeit von Fehlern bei der Überprüfung der formatbezogenen Indikatoren geringer ist.

Diese Aufgabe wird bei einem Verfahren der eingangs genannten Art erfindungsgemäß dadurch gelöst, daß in Abhängigkeit von der Zusammenfassung von Datenrahmen bzw. Frames in Bündeln die Anzahl der zulässigen formatbezogenen Indikatoren vermindert wird. Die Aufgabe wird bei einer Basisstation oder einer Mobilstation eines funkbasierten Telekommunikationssystems sowie bei einem Empfänger für eine derartige Basisstation oder Mobilstation in entsprechender Weise gelöst.

Durch die Verminderung der Anzahl von zulässigen formatbezogenen Indikatoren wird gleichzeitig die Wahrscheinlichkeit für das Auftreten eines Fehlers bei der Überprüfung der formatbezogenen Indikatoren vermindert. Je weniger formatbezogene Indikatoren zulässig sind, desto weniger Fehler können bei deren Überprüfung auftreten. Dies ist aber gleichbedeutend damit, daß die Wahrscheinlichkeit vermindert wird, daß das gesamte Format, insbesondere die Dekodierung und/oder Demodulation der empfangenen Daten fehlerhaft durchgeführt wird. Die Wahrscheinlichkeit, daß empfangene Daten unwiederbringbar verloren sind, wird damit geringer und die Qualität des gesamten Telekommunikationssystems somit höher.

Erreicht wird die erfindungsgemäße Verminderung der Anzahl der zulässigen TFC-Indikatoren durch die Berücksichtigung der Zusammenfassung von Datenrahmen bzw. Frames in Bündeln. Sind in einem UMTS-Telekommunikationssystem beisielsweise acht Frames zu einem Bündel zusammengefaßt, und ist der TFC-Indikator des ersten Frames dieses Bündels z.B. gleich Null, so wird erfindungsgemäß daraus geschlossen, daß der TFC-Indikator der nächsten sieben Frames ebenfalls gleich Null sein muß. Für diese nachfolgenden sieben Frames wird dann erfindungsgemäß nur ein TFC-Indikator zugelassen, der gleich Null ist. Ein TFC-Indikator gleich Eins wird für diese nachfolgenden sieben Frames ausgeschlossen. Dies stellt die vorstehend beschriebene Verminderung der Anzahl von zulässigen formatbezogenen Indikatoren dar, die ihrerseits zu der erläuterten Verminderung der Fehlerwahrscheinlichkeit führt.

Besonders vorteilhaft ist es, wenn für einen bestimmten Datenrahmen bzw. Frame diejenigen formatbezogenen Indikatoren ausgeschlossen werden, die aufgrund der Zusammenfassung von Frames in Bündeln in dem bestimmten Frame gar nicht auftreten dürfen. Es werden also für einen bestimmten Frame nur noch diejenigen formatbezogenen Indikatoren als zulässig festgelegt, die auch unter Berücksichtigung der Zusammenfassung von Frames in Bündeln in dem bestimmten Frame überhaupt auftreten dürfen. Damit wird bei einem UMTS-Telekommunikationssystem das TFC-Set für die zulässigen TFC-Indikatoren fortlaufend verändert. Und zwar wird dieses TFC-Set immer auf die minimale Anzahl von zulässigen TFC-Indikatoren begrenzt. Diejenigen TFC-Indikatoren, die aufgrund der Zusammenfassung von Frames in Bündeln gar nicht auftreten dürfen, werden erfindungsgemäß von dem TFC-Set ausgeschlossen. Damit sind fortlaufend nur die minimal zulässigen TFC-Indikatoren vorhanden, was - wie erläutert wurde - zu einer Verminderung der Fehlerwahrscheinlichkeit bei der Überprüfung dieser TFC-Indikatoren führt.

Weitere Merkmale, Anwendungsmöglichkeiten und Vorteile der Erfindung ergeben sich aus der nachfolgenden Beschreibung von Ausführungsbeispielen der Erfindung. Dabei bilden alle beschriebenen Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung in der Beschreibung.

### Ausführungsbeispiele der Erfindung

In einem UMTS-Telekommunikationssystem (UMTS = universal mobile telecommunication system) werden Kontrolldaten in einem DPCCH-Kanal (DPCCH = dedicated physical control channel) und die sogenannte "Payload", also die eigentlich zu übertragenden Daten, in einem DPDCH-Kanal (DPDCH = dedicated physical data channel) zwischen einer Basisstation (sogenannte Node B) und einer Mobilstation (sogenannte UE = user equipment) übertragen. Die Übertragung der Kontrolldaten und der Payload erfolgt dabei in Datenrahmen, sogenannten Frames (frame = Rahmen), die jeweils 10 Millisekunden lang sind. In der nachfolgenden Beschreibung ist der Begriff "Frame" benutzt, der jedoch mit dem Begriff "Datenrahmen" gleichbedeutend ist.

In jedem Frame des DPCCH-Kanals ist ein sogenannter TFC-Indikator (TFC = transport format combination) enthalten, durch den festgelegt wird, wie die Informationen in der gleichzeitig übertragenen Payload des DPDCH-Kanals zu interpretieren sind. Dieser TFC-Indikator gibt insbesondere Hinweise, wie die Payload zu demodulieren und/oder zu dekodieren ist. In jedem Empfänger, also in der empfangenden Node B oder der empfangenden UE, wird der auf dem DPDCH-Kanal eingehende Frame zwischengespeichert, bis der auf dem DPCCH-Kanal eingehende Frame mit dem dort enthaltenenen TFC-Indikator gelesen ist, um daraufhin den zwischengespeicherten Frame mit Hilfe des gelesenen TFC-Indikators zu interpretieren.

Der TFC-Indikator enthält unter anderem Informationen, die angeben, ob mehrere aufeinanderfolgende Frames auf dem DPCCH-Kanal und dem DPDCH-Kanal zu einem Bündel zusammengefaßt sind. Dabei ist es möglich, daß zwei oder vier oder acht Frames ein derartiges Bündel bilden. Diese Bündel sind dann entsprechend 20 oder 40 oder 80 Millisekunden lang. Weiterhin dürfen derartige Bündel nur in einem festen Zeitraster beginnen. So dürfen 80-Millisekunden-Bündel nur alle 80 Millisekunden beginnen und 40- bzw. 20-Millisekunden-Bündel entsprechend nur alle 40 bzw. 20 Millisekunden.

Die Zusammenfassung von Frames in Bündeln wird in einem sogenannten Setup definiert. In diesem Setup wird auch ein TFC-Set übertragen, das angibt, welche TFC-Indikatoren für die nachfolgende Übertragung zugelassen sind.

Wird von einem Empfänger ein Frame mit Kontrolldaten auf dem DPCCH-Kanal empfangen, so prüft der Empfänger, ob der darin enthaltene TFC-Indikator zulässig ist, ob also der erhaltene TFC-Indikator in dem im Setup übertragenen TFC-Set enthalten ist. Es besteht eine von Null verschiedene Wahrscheinlichkeit, daß diese Überprüfung zu einem fehlerhaften Ergebnis führt.

In Abhängigkeit von der Zusammenfassung von Frames in Bündeln können dabei gegebenenfalls bestimmte TFC-Indikatoren aus dem TFC-Set ausgeschlossen werden. Die Anzahl der möglichen TFC-Indikatoren in dem TFC-Set wird dadurch geringer. Dies ist gleichbedeutend mit einer geringeren Wahrscheinlichkeit, daß bei der Überprüfung der Zulässigkeit des empfangenen TFC-Indikators ein Fehler auftritt.

In dem folgenden ersten Beispiel, das z.B. die Übertragung von Sprache betrifft, wird angenommen, daß acht Frames zu einem Bündel zusammengeschlossen sind, das damit 80 Millisekunden lang ist. Dieses Bündel kann somit nur in dem vorgegebenen Zeitraster von 80 Millisekunden beginnen. Das vorgegebene TFC-Set enthält die TFC-Indikatoren TFCI = 0 und TFCI = 1. TFCI = 0 bedeutet, daß keine Payload vorhanden ist und TFCI = 1 bedeutet, daß eine Payload vorhanden ist.

Werden nunmehr im Empfänger mehrere TFCIs = 0 und daraufhin ein TFCI = 1 empfangen, so wird geprüft, ob die TFCI = 1 zu einem neuen Bündel gehört, das in korrekter Weise in dem Zeitraster von 80 Millisekunden beginnt. Ist dies nicht der Fall, so wird ein Fehler erkannt. Liegt der Erhalt des TFCI = 1 korrekt in dem Zeitraster für die 80-Millisekunden-Bündel, so wird der TFCI = 1 zugelassen und entsprechend weiterverarbeitet. Weiterhin wird in diesem Fall festgelegt, daß die nächsten sieben TFCIs zwingend auch gleich "1" sein müssen. Dies ergibt sich daraus, daß bei einem 80-Millisekunden-Bündel immer acht Frames von jeweils 10 Millisekunden zusammengehören, die somit alle einen TFCI = 1 aufweisen müssen. Die vorstehende Festlegung ist gleichbedeutend damit, daß der TFC-Set für die nachfolgenden sieben Frames geringer wird, und zwar um die Möglichkeit, daß TFCI = 0 ist. TFCI = 0 wird also in dem TFC-Set für die nächsten sieben Frames ausgeschlossen. Das TFC-Set weist somit bei den nächsten sieben Frames nur noch die Möglichkeit auf, daß TFCI = 1 ist.

In dem folgenden zweiten Beispiel wird angenommen, daß zwei Datenströme vorhanden sind, die im Multiplexverfahren übertragen werden. Der erste Datenstrom soll Sprache betreffen und der zweite Datenstrom soll eine Neu-Anwahl durch einen Benutzer betreffen. Weiterhin wird angenommen, daß bei dem ersten Datenstrom zwei Frames zu einem Bündel zusammengefaßt sind, während bei dem zweiten Datenstrom acht Frames zu einem Bündel zusammengefaßt sind. Dies ist gleichbedeutend damit, daß der erste Datenstrom immer nur in einem Zeitraster von 20 Millisekunden beginnen darf und der zweite Datenstrom immer nur in einem Zeitraster von 80 Millisekunden.

Daraus ergibt sich ein TFC-Set wie folgt: TFCI = 0 bedeutet keine Payload, also weder Sprach-Payload, noch Anwahl-Payload, TFCI = 1 bedeutet nur Sprach-Payload, TFCI = 2 bedeutet nur Anwahl-Payload, und TFCI = 3 bedeutet Sprachund Anwahl-Payload.

In der nachfolgenden Tabelle sind die Möglichkeiten angegeben, die sich in dem vorliegenden zweiten Beispiel ergeben:

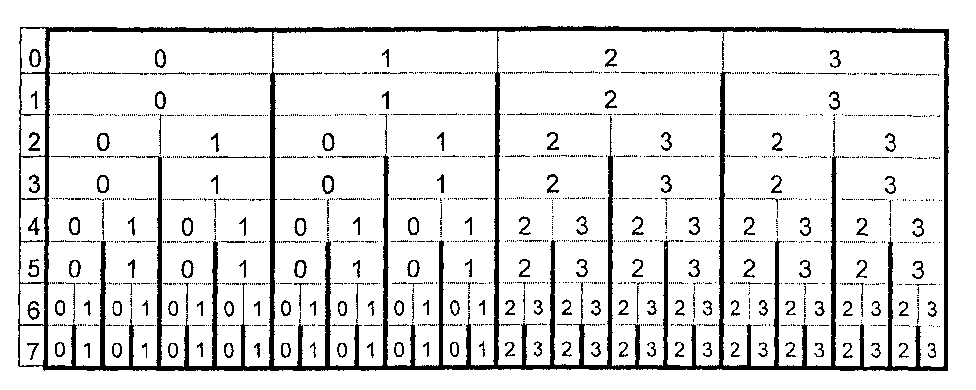

In der schmalen Spalte ganz links außen in der Tabelle sind die aufeinanderfolgenden Frames durch aufeinanderfolgende Nummern angegeben, und zwar acht Frames mit den Nummern "0" bis "7".

Es wird nunmehr - wie bei dem ersten Beispiel - davon ausgegangen, daß im Empfänger mehrere TFCIs = 0 empfangen worden sind, und daß dann einer derjenigen TFC-Indikatoren empfangen wird, der in der ersten Zeile und damit für den ersten Frame mit der Nummer 0 angegeben ist. Dabei kann es sich um einen TFCI = 0, einen TFCI = 1, einen TFCI = 2 oder einen TFCI = 3 handeln. Diese vier Möglichkeiten werden nachfolgend anhand der Tabelle näher erläutert.

TFCI = 0 in dem Frame mit der Nummer 0, siehe vierte Spalte von rechts in der Tabelle:

Wird in dem Frame mit der Nummer 0 ein TFCI = 0 empfangen, so hat das zur Folge, daß in dem darauffolgenden Frame mit der Nummer 1 ebenfalls nur ein TFCI = 0 ankommen darf. Dies ergibt sich daraus, daß immer nur in einem Zeitraster von entweder 20 Millisekunden oder 80 Millisekunden einer der beiden Datenströme beginnen darf. Damit ist es nicht zulässig, daß bei dem Frame mit der Nummer 1, der nach 10 Millisekunden eintrifft, einer der beiden Datenströme beginnt.

Diese Festlegung, daß in dem Frame mit der Nummer 1 nur ein TCFI = 0 vorhanden sein darf, wird dadurch berücksichtigt, daß in diesem Frame mit der Nummer 1 das TFC-Set eingeschränkt wird. Zu diesem Zweck wird der TFCI = 1 in dem genannten Frame aus dem TFC-Set herausgenommen. Das TFC-Set wird also um diesen TFCI = 1 vermindert. Dies ist auch aus der Tabelle ersichtlich, wo in dem Frame mit der Nummer 1 nur der TFCI = 0 unter dem vorhergehenden TFCI = 0 des Frames mit der Nummer 0 steht.

In dem Frame mit der Nummer 2 gibt es nur zwei Möglichkeiten, und zwar kann entweder ein TFCI = 0 oder ein TFCI = 1 empfangen werden. Dies resultiert daraus, daß der erste Datenstrom mit dem Zeitraster von 20 Millisekunden in diesem Frame mit der Nummer 2 beginnen kann, der zweite Datenstrom mit dem Zeitraster von 80 Millisekunden jedoch nicht. Deshalb darf ein TFCI = 2 oder ein TFCI = 3, die beide immer den zweiten Datenstrom voraussetzen, nicht eintreffen.

Die zu empfangenden TFC-Indikatoren sind somit wieder auf die beiden genannten Möglichkeiten eingeschränkt, also auf TFCI = 0 und TFCI = 1. Dies ist auch aus der Tabelle ersichtlich, in der unter den beiden TFCIs = 0 der ersten beiden Frames mit den Nummern 0 und 1 in dem nächsten Frame mit der Nummer 2 nur der TFCI = 0 und der TFCI = 1 angegeben sind.

In dem Frame mit der Nummer 3 kann sich der TFC-Indikator wiederum nicht ändern. Insoweit korrespondiert der Frame mit der Nummer 3 mit dem Frame mit der Nummer 1. War in dem Frame mit der Nummer 2 der TFCI = 0, so muß er dies in dem Frame mit der Nummer 3 weiterhin sein. Entsprechendes gilt, sofern der TFCI = 1 war. Dies liegt daran, daß der erste Datenstrom nur in einem Zeitraster von 20 Millisekunden beginnen kann, und daß der Frame mit der Nummer 3 nicht zu diesem Zeitraster gehört.

Der Frame mit der Nummer 4 paßt nun wiederum in das Zeitraster von 20 Millisekunden. Aus diesem Grund kann dort der erste Datenstrom beginnen. Dies ist dabei unabhängig davon, welcher TFC-Indikator in dem Frame mit der Nummer 3 empfangen worden ist. Insoweit korrespondiert der Frame mit der Nummer 4 mit dem Frame mit der Nummer 2. In beiden Fällen, also wenn in dem Frame mit der Nummer 3 der TFCI = 0 oder der TFCI = 1 war, kann in dem nachfolgenden Frame mit der Nummer 4 der TFCI = 0 oder TFCI = 1 sein. Dies ist auch aus der Tabelle ersichtlich.

Wesentlich ist, daß in dem Frame mit der Nummer 4 - wie bereits auch in den vorausgehenden Frames - die Anzahl der möglichen TFC-Indikatoren eingeschränkt ist. Diejenigen TFC-Indikatoren, die nicht möglich sind, werden aus dem TFC-Set herausgenommen, so daß das TFC-Set insoweit vermindert ist.

In den nachfolgenden Frames mit den Nummern 5, 6 und 7 können weiterhin immer nur der TFCI = 0 oder der TFCI = 1 auftreten. Dies liegt daran, daß der zweite Datenstrom mit dem Zeitraster von 80 Millisekunden in all diesen Frames nicht beginnen kann. Statt dessen kann entweder der erste Datenstrom mit dem Zeitraster von 20 Millisekunden vorhanden sein, TFCI = 1, oder nicht vorhanden sein, TFCI = 0. Weiterhin ist dieser zweite Datenstrom dann immer für zwei aufeinanderfolgende Frames entweder vorhanden oder nicht vorhanden.

Dieses beschriebene Auftreten von TFCI = 0 oder TFCI = 1 in den Frames mit den Nummern 5, 6 und 7 ist auch aus der Tabelle zu entnehmen.

TFCI = 1 in dem Frame mit der Nummer 0, siehe dritte Spalte von rechts in der Tabelle:

Wird in dem Frame mit der Nummer 0 ein TFCI = 1 empfangen, so bedeutet dies, daß der erste Datenstrom mit dem Zeitraster von 20 Millisekunden beginnt. Dies hat zur Folge, daß in dem darauffolgenden Frame mit der Nummer 1 ebenfalls nur ein TFCI = 1 ankommen darf. Wie bereits erläutert wurde, ergibt sich dies daraus, daß der zweite Datenstrom immer nur in einem Zeitraster von 80 Millisekunden beginnen darf. Damit ist es nicht zulässig, daß bei dem Frame mit der Nummer 1, der nach 10 Millisekunden eintrifft, der zweite Datenstrom beginnt.

Ab dem Frame mit der Nummer 2 sind dieselben Verhältnisse vorhanden, wie dies bereits beschrieben wurde. Es können in den nachfolgenden Frames immer nur der TFCI = 0 oder der TFCI = 1 auftreten. Der TFCI = 2 oder der TFCI = 3 können nicht auftreten, da dies den Beginn des zweiten Datenstroms bedingen würde. Dieser Beginn kann jedoch nur in dem Zeitraster von 80 Millisekunden stattfinden, was bei den vorgenannten Frames nicht erfüllt ist.

Damit ist es möglich, wie dies ebenfalls bereits beschrieben wurde, das TFC-Set entsprechend zu vermindern, indem nur diejenigen TFC-Indikatoren in dem TFC-Set enthalten sind, die überhaupt auftreten können, also gemäß der vorstehenden Beschreibung nur der TFCI = 0 und/oder der TFCI = 1. Die Anzahl der möglichen TFC-Indikatoren in dem TFC-Set wird dadurch geringer. Dies ist gleichbedeutend mit einer geringeren Wahrscheinlichkeit, daß bei der Überprüfung der Zulässigkeit des empfangenen TFC-Indikators ein Fehler auftritt.

TFCI = 2 oder TFCI = 3 in dem Frame mit der Nummer 0, siehe zweite und erste Spalte von rechts in der Tabelle:

Der TFCI = 2 und der TFCI = 3 in dem Frame mit der Nummer 0 bedeuten, daß der zweite Datenstrom beginnt. Dieser ist 80 Millisekunden lang und ist damit in acht aufeinanderfolgenden Frames vorhanden. Damit können die nachfolgenden TFC-Indikatoren in den Frames mit den Nummern 1 bis 7 nicht TFCI = 0 oder TFCI = 1 sein, da bei diesen TFC-Indikatoren der zweite Datenstrom nicht vorhanden ist. Statt dessen müssen die TFC-Indikatoren in den Frames mit den Nummern 1 bis 7 entweder TFCI = 2 oder TFCI = 3 sein, da nur bei diesen TFC-Indikatoren der zweite Datenstrom vorhanden ist. Dies ist auch aus der Tabelle ersichtlich.

Wie erwähnt, können die TFC-Indikatoren in den Frames mit den Nummer 1 bis 7 nur TFCI = 2 oder TFCI = 3 sein, wenn in dem Frame mit der Nummer 0 der TFCI = 2 oder der TFCI = 3 empfangen wird. Welcher der beiden genannten TFC-Indikatoren zulässig ist, ist wiederum aus der Tabelle ersichtlich. Dabei hängt dies davon ab, ob in einem der Frames mit den Nummern 0, 2, 4 oder 6 der erste Datenstrom zusätzlich zu dem zweiten Datenstrom beginnt. Ist dies der Fall, so ist zumindest für zwei aufeinanderfolgende Frames der TFCI = 3 vorhanden. Die zwei aufeinanderfolgenden Frames ergeben sich dabei daraus, daß der erste Datenstrom ein Zeitraster von 20 Millisekunden aufweist, so daß immer zwei aufeinanderfolgende Frames von dem zweiten Datenstrom mindestens belegt werden.

Damit ist es möglich, wie dies ebenfalls bereits beschrieben wurde, das TFC-Set entsprechend zu vermindern, indem nur diejenigen TFC-Indikatoren in dem TFC-Set enthalten sind, die überhaupt auftreten können, also gemäß der vorstehenden Beschreibung nur der TFCI = 2 und/oder der TFCI = 3. Die Anzahl der möglichen TFC-Indikatoren in dem TFC-Set wird dadurch geringer. Dies ist gleichbedeutend mit einer geringeren Wahrscheinlichkeit, daß bei der Überprüfung der Zulässigkeit des empfangenen TFC-Indikators ein Fehler auftritt.

Nachdem alle acht, in der Tabelle dargestellten Frames empfangen worden sind, kann wiederum jeder TFC-Indikator auftreten, also der TFCI = 0, der TFCI = 1, der TFCI = 2 und der TFCI = 3. Dies entspricht dem Frame mit der Nummer 0 in der Tabelle. Insoweit kann danach die Tabelle und insbesondere die aus der Tabelle entnehmbaren Einschränkungen für die möglichen TFC-Indikatoren des TFC-Sets entsprechend von neuem angewendet werden. Damit ist es auf Dauer möglich, die TFC-Indikatoren des TFC-Sets zu beschränken, was gleichbedeutend ist mit einer geringeren Wahrscheinlichkeit, daß bei der Überprüfung der Zulässigkeit des empfangenen TFC-Indikators ein Fehler auftritt.

## Patentansprüche

1. Verfahren zum Betreiben eines funkbasierten Telekommunikationssystems, insbesondere eines UMTS-Telekommunikationssystems, bei dem die zu übertragenden Daten in Datenrahmen, sogenannten Frames, übertragen werden, bei dem mehrere Datenrahmen zu einem Bündel zusammengefaßt werden, bei dem zu jedem Datenrahmen ein formatbezogener Indikator übertragen wird, und bei dem vorab eine Anzahl von zulässigen formatbezogenen Indikatoren festgelegt wird, **dadurch gekennzeichnet, daß** in Abhängigkeit von der Zusammenfassung von Datenrahmen in Bündeln die Anzahl der zulässigen formatbezogenen Indikatoren vermindert wird.

2. Verfahren nach Anspruch 1, **dadurch gekennzeichnet, daß** für einen bestimmten Datenrahmen diejenigen formatbezogenen Indikatoren ausgeschlossen werden, die aufgrund der Zusammenfassung von Datenrahmen in Bündeln in dem bestimmten Datenrahmen gar nicht auftreten dürfen.

3. Verfahren nach einem der Ansprüche 1 oder 2, **dadurch gekennzeichnet, daß** für einen bestimmten Datenrahmen nur noch diejenigen formatbezogenen Indikatoren als zulässig festgelegt werden, die auch unter Berücksichtigung der Zusammenfassung von Datenrahmen in Bündeln in dem bestimmten Datenrahmen überhaupt auftreten dürfen.

4. Empfänger für eine Basisstation oder für eine Mobilstation eines funkbasierten Telekommunikationssystems, insbesondere eines UMTS-Telekommunikationssystems, bei dem die zu übertragenden Daten in Datenrahmen, sogenannten Frames, übertragen werden, bei dem mehrere Datenrahmen zu einem Bündel zusammengefaßt werden, bei dem zu jedem Datenrahmen ein formatbezogener Indikator übertragen wird, und bei dem vorab eine Anzahl von zulässigen formatbezogenen Indikatoren festgelegt wird, **dadurch gekennzeichnet, daß** in dem Empfänger Mittel vorgesehen sind, mit denen in Abhängigkeit von der Zusammenfassung von Datenrahmen in Bündeln die Anzahl der zulässigen formatbezogenen Indikatoren vermindert wird.

5. Basisstation oder Mobilstation für ein funkbasiertes Telekommunikationssystem, insbesondere für ein UMTS-Telekommunikationssystem, bei dem die zu übertragenden Daten in Datenrahmen, sogenannten Frames, übertragen werden, bei dem mehrere Datenrahmen zu einem Bündel zusammengefaßt werden, bei dem zu jedem Datenrahmen ein formatbezogener Indikator übertragen wird, und bei dem vorab eine Anzahl von zulässigen formatbezogenen Indikatoren festgelegt wird, **dadurch gekennzeichnet, daß** Mittel vorgesehen sind, mit denen in Abhängigkeit von der Zusammenfassung von Datenrahmen in Bündeln die Anzahl der zulässigen formatbezogenen Indikatoren vermindert wird.
